# EUROPÄISCHE PATENTSCHRIFT

(11) **EP 0 897 931 B1**
(45) Veröffentlichungstag und Bekanntmachung des Hinweises auf die Patenterteilung: **02.01.2003**
(21) Anmeldenummer: 98115370.3
(22) Anmeldetag: 14.08.1998
(51) Int. Cl.: C08F 6/00, B01J 19/00, B01J 19/18

(54) **Verfahren zur Abkühlung von Dispersionen und Flüssigkeiten**
Process for cooling of dispersions and liquids
Procédé pour refroidissement de dispersions et de liquides

(30) Priorität: 18.08.1997 DE 19735807
(43) Veröffentlichungstag der Anmeldung: 24.02.1999
(73) Patentinhaber: BASF AKTIENGESELLSCHAFT, 67056 Ludwigshafen (DE)
(72) Erfinder: Hübinger, Wolfgang, Dr., 67117 Lumburgerhof (DE); Wunder, Rainer, Dr., 67373 Dudenhofen (DE); Bauer, Gerhard, Dr., 69469 Weinheim (DE); Dobbelaar, Johannes, Dr., 67157 Wachenheim (DE); Lawrenz, Sven, 68161 Mannheim (DE); Mueseler, Franz-Josef, Dr., 67435 Neustadt (DE); Nahstoll, Jürgen, Dr., 67304 Eisenberg (DE); Rupaner, Robert, Dr., 67158 Ellerstadt (DE); Schmidt, Christian-Ulrich, Dr., 68163 Mannheim (DE)
(74) Vertreter: Isenbruck, Günter, Dr.

(56) Entgegenhaltungen:
- DE-A- 3 123 300
- DE-B- 1 248 943
- US-A- 4 086 414

## Beschreibung

Die Erfindung betrifft ein Verfahren zur Abkühlung von Dispersionen und Flüssigkeiten, die zunächst in einem Kessel desodoriert werden.

Es ist bekannt, Polymerdispersionen durch sogenannte Suspensions- oder Emulsionspolymerisationen herzustellen. Die Produkte enthalten üblicherweise noch unerwünschte flüchtige organische Komponenten, wie Restmonomere resultierend aus einem nicht vollständigen Umsatz, Verunreinigungen aus den Einsatzstoffen, Zerfallsprodukte der Initiatoren oder niedermolekulare Produkte aus Nebenreaktionen. Diese Verbindungen werden im folgenden mit dem Sammelbegriff "Restflüchtige" bezeichnet. In der Entscheidung der Kommission 96/13/EG zur Festlegung von Umweltkriterien für die Vergabe des EG-Umweltzeichens bei Innenfarben und -lacken vom 15. Dezember 1995 werden diese Restflüchtigen in flüchtige organische Verbindungen (VOC) und flüchtige aromatische Kohlenwasserstoffe aufgeteilt. In beiden Fällen handelt es sich um organische Verbindungen mit einem Siedepunkt (oder Siedebeginn) von höchstens 250°C bei normalen Druckbedingungen. Die flüchtigen aromatischen Kohlenwasserstoffe weisen dabei mindestens einen aromatischen Kern in der Strukturformel auf. Der hier verwendete Sammelbegriff "Restflüchtige" bezeichnet alle derartigen organischen Verbindungen mit einem Siedepunkt (oder Siedebeginn) von höchstens 250°C.

Neben Dispersionen können auch Flüssigkeiten Restflüchtige enthalten. Beispielsweise verbleibt beim Brechen einer durch Emulsionspolymerisation gebildeten Dispersion mit einem Elektrolyten oder mit Säure zumindest ein Teil der Restflüchtigen in der Flüssigkeit zurück, die sich von dem Polymerisat abscheidet. Die Restflüchtigen können bei einer umweltgerechten Entsorgung solcher Flüssigkeiten problematisch sein. Außerdem sind Restflüchtige bei vielen Anwendungen von Dispersionen oder Suspensionen, so zum Beispiel im Lebensmittel- oder Kosmetikbereich oder bei Innenraumanwendungen unerwünscht, und man ist bestrebt, diese möglichst vollständig zu entfernen.

Dispersionen oder Flüssigkeiten werden daher einer Behandlung unterzogen, die die Restflüchtigen entfernt. Diese Behandlung wird als Desodorierung bezeichnet. Dazu sind verschiedene Verfahren und Vorrichtungen bekannt: Neben chemischen Verfahren, die jedoch meist nur die ungesättigten Verbindungen beeinflussen, sind dies überwiegend Strippverfahren (siehe z.B. DE-A-3123300 und US-A-4086414), bei denen ein Strippgas durch die Suspension oder Dispersion geleitet wird. Als Strippgas kommen Luft, Stickstoff, überkritisches Kohlendioxid, Ozon oder Wasserdampf zum Einsatz. Apparate, in denen die Suspension oder Dispersion mit dem Strippgas behandelt wird, können unterschiedliche Formen aufweisen. In der einfachsten Ausführung besteht der Apparat aus einem Behälter, der die Suspension oder Dispersion aufnimmt, und durch den mittels Lanzen oder Ventile am Behälterboden das Strippgas eingeleitet wird.

Die Messung des Gehalts an Restflüchtigen erfolgt dabei nach dem DRAFT International Standard ISO/DIS 13741, Teil 1, durch Gaschromatographie. Sie werden in dieser Norm als verbleibende Monomere und andere organische Komponenten bezeichnet. Als Beispiele sind Acrylsäureester, wie n-Butylacrylat und Isobutylacrylat, Methacrylsäureester wie Methylmethacrylat, Acrylnitril, Butadien, Styrol, Vinylacetat, Vinylchlorid, wie auch Nebenprodukte, zum Beispiel Acetaldehyde und Ethylbenzol, angegeben. Ferner sind Propionitril, Ethylacrylat und 4-Vinylcyclohexen aufgeführt.

Das gewünschte Maß einer Desodorierung, die Gründlichkeit der Entfernung von Restflüchtigen, richtet sich nach der Anwendung und Qualität oder nach der Umweltkompatibilität der entsprechenden Dispersionen oder Flüssigkeiten. Die für das Verfahren bevorzugten Dispersionen und Flüssigkeiten sind nachstehend aufgeführt.

### Flüssigkeiten

Die im erfindungsgemäßen Verfahren eingesetzten Flüssigkeiten können beliebige Flüssigkeiten mit entfernbarem Gehalt an Restflüchtigen sein. Vorzugsweise werden wäßrige Lösungen oder Flüssigkeiten mit einer hohen Viskosität eingesetzt. Beispiele derartiger Flüssigkeiten können Lösungen sein, die nach Abtrennung des Polymerisats aus Supensions- oder Emulsionspolymerisationen hervorgehen oder viskose Flüssigkeiten wie längerkettige Paraffine oder Glykole, die unerwünschte flüchtige Komponenten enthalten, insbesondere dann, wenn diese als Lösungsmittel dienen. Als weitere Beispiele können Polymerlösungen, insbesondere wäßrige Polymerlösungen, aufgeführt werden. Diese enthalten nach der Herstellung im entsprechenden Lösungsmittel häufig noch Restmonomere und andere Komponenten, die durch Desodorierung entfernt werden können.

### Dispersionen

Die im erfindungsgemäßen Verfahren eingesetzten Dispersionen können beliebige Dispersionen sein, die entfernbare Gehalte an Restflüchtigen aufweisen. Beispiele derartiger Dispersionen können Dispersionen von kontaminierten Erdböden, Dispersionen von anorganischen Teilchen, Dispersionen von Biomolekülen und vorzugsweise Dispersionen von organischen Verbindungen, insbesondere Polymerdispersionen sein. Die Dispersionen sind dabei vorzugsweise wäßrige Dispersionen.

Die für das erfindungsgemäße Verfahren bevorzugt geeigneten wäßrigen Polymerisatdispersionen sind fluide Systeme, die als disperse Phase im wäßrigen Dispergiermedium Polymerisatteilchen in stabiler disperser Verteilung enthalten. Der Durchmesser der Polymerisatteilchen liegt im allgemeinen hauptsächlich im Bereich von 0,01 bis 5 µm, häufig hauptsächlich im Bereich von 0,01 bis 1 µm. Die Stabilität der dispersen Verteilung erstreckt sich oft über einen Zeitraum von mindestens einem Monat, vielfach sogar über einen Zeitraum von mindestens 6 Monaten.

Ebenso wie Polymerisatlösungen beim Verdampfen des Lösungsmittels, weisen wäßrige Polymerisatdispersionen beim Verdampfen des wäßrigen Dispergiermediums die Eigenschaft auf, Polymerisatfilme zu bilden, weshalb wäßrige Polymerisatdispersionen in vielfacher Weise als Bindemittel, z.B. für Anstrichfarben oder Massen zum Beschichten von Leder, Anwendung finden.

Prinzipiell unterscheidet man wäßrige Polymerisatdispersionen in wäßrige Sekundär- und wäßrige Primärdispersionen. Die wäßrigen Sekundärdispersionen sind solche, bei deren Herstellung das Polymerisat außerhalb des wäßrigen Dispergiermediums erzeugt wird, zum Beispiel in Lösung eines geeigneten nicht-wäßrigen Lösungsmittels. Diese Lösung wird anschließend in das wäßrige Dispergiermedium überführt und das Lösungsmittel unter Dispergierung, in der Regel destillativ, abgetrennt. Demgegenüber handelt es sich bei wäßrigen Primärdispersionen um solche, bei denen das Polymerisat unmittelbar in disperser Verteilung im wäßrigen Dispergiermedium selbst erzeugt wird. Allen Herstellverfahren ist im wesentlichen gemein, daß zum Aufbau des Polymerisats Monomere, die wenigstens eine ethylenisch ungesättigte Gruppierung aufweisen, mitverwendet werden oder daß der Polymeraufbau ausschließlich aus solchen Monomeren erfolgt.

Der Einbau solcher wenigstens eine ethylenisch ungesättigte Gruppierung aufweisender Monomeren erfolgt üblicherweise durch initiierte Polyreaktion, wobei die Art und Weise der angewandten Initiierung insbesondere von den gewünschten anwendungstechnischen Eigenschaften des Zielproduktes bestimmt und diesen daher angepaßt wird. In Betracht kommt beispielsweise eine ionische oder eine radikalische Initiierung. Der Einbau kann aber auch durch katalytisch initiierte polymeranaloge Umsetzung erfolgen. Besonders häufig wird die radikalische Initiierung angewandt, weshalb der Einbau von ethylenisch ungesättigte Gruppierungen aufweisenden Monomeren im Fall von wäßrigen Primärdispersionen in der Regel nach der Methode der radikalischen wäßrigen Emulsionspolymerisation und im Fall von wäßrigen Sekundärdispersionen in der Regel nach der Methode der radikalischen Lösungspolymerisation erfolgt.

Die Polyreaktionsbedingungen werden so gewählt, daß die gewünschten Eigenschaften des Polymers, wie Molekulargewicht, Molekulargewichtsverteilung und Verzweigungsgrad erhalten werden. Zur raschen Reaktionsführung ist es in der Regel nicht sinnvoll, die Reaktion bis zum vollständigen Umsatz durchzuführen. Deshalb weisen die nach der Umsetzung erhaltenen wäßrigen Polymerdispersionen im Normalfall noch, insbesondere ethylenisch ungesättigte, Monomere auf. Aufgrund der erhöhten Reaktionsfähigkeit der ethylenisch ungesättigten Doppelbindung sind derartige Restmonomere, wie Acrylnitril und Vinylacetat, toxikologisch nicht völlig unbedenklich und sollten daher aus der Dispersion entfernt werden. Hierzu dient das vorliegende Verfahren. Das Verfahren ist für alle in einem wäßrigen Medium dispergierten Polymerisate einsetzbar, unabhängig von der Art der Polymere. Der Begriff "Polymerisat" umfaßt hier deshalb sowohl Polykondensate wie Polyester, Polyaddukte wie Polyurethane und Polymerisate, die durch ionische oder radikalische Polymerisation zugänglich sind. Mischvarianten der genannten Synthesen, wie auch Copolymerisate ergeben ebenfalls erfindungsgemäß verwendbare Dispersionen.

Die Herstellung wäßriger Polymerisatdispersionen der vorgenannten verschiedenen Polymerisattypen ist bekannt, zum Beispiel aus Encyclopedia of Polymer Science and Engineering, Volume 8, Seite 659ff (1987); D.C. Blackley, in High Polymer Latices, Volume 1, Seite 35ff (1966); H. Warson, The Application of Synthetic Resin Emulsions, Seite 246ff, Kapitel 5 (1972); [Verlag?] D. Diederich, Chemie in unserer Zeit 24, Seite 135 bis 142 (1990); Emulsion Polymerization, Interscience Publishers, New York (1965); DE-A 40 03 422 und Dispersionen synthetischer Hochpolymerer, F. Hölscher, Springer-Verlag, Berlin (1969).

Als wenigstens eine monoethylenisch ungesättigte Gruppe aufweisende Monomere kommen für das erfindungsgemäße Verfahren unter anderem insbesondere in einfacher Weise radikalisch polymerisierbare Monomere in Betracht, wie die Olefine, zum Beispiel Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat, Vinylpivalat und Vinylstearat, sowie im Handel befindliche Monomere VEOVA 9 bis 11 (VEOVA ist ein Handelsname der Shell und steht für Vinylester von Carbonsäuren, die auch als Versatic® X-Säuren bezeichnet werden), Ester aus vorzugsweise 3 bis 6 C-Atome aufweisenden, α,β-mono-ethylenisch ungesättigten Mono- und Dicarbonsäuren, wie Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie Acrylsäure- und Methacrylsäuremethyl-, -ethyl-, -n-butyl-, -iso-butyl-, -tert.-butyl- und -2-ethylhexylester, Maleinsäuredimethylester oder Maleinsäure-n-butylester, Nitrile α,β-monoethylenisch ungesättigter Carbonsäuren, wie Acrylnitril, sowie C₄₋₈-konjugierte Diene, wie 1,3-Butadien und Isopren. Die genannten Monomeren bilden im Fall von ausschließlich durch radikalische wäßrige Emulsionspolymerisation erzeugten wäßrigen Polymerisatdispersionen in der Regel die Hauptmonomeren, die bezogen auf die Gesamtmenge der nach dem Verfahren der radikalischen wäßrigen zu polymerisierenden Monomeren normalerweise einen Anteil von mehr als 50 Gew.-% auf sich vereinen. In aller Regel weisen diese Monomeren in Wasser bei Normalbedingungen (25°C, 1 atm) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide, wie Acrylsäure, Methacrylsäure, Maleinsäure, Fumarsäure, Itaconsäure, Acrylamid und Methacrylamid, ferner Vinylsulfonsäure und deren wasserlösliche Salze, sowie N-Vinylpyrrolidon.

Im Fall von ausschließlich durch radikalische wäßrige Emulsionspolymerisation erzeugten wäßrigen Polymerisatdispersionen werden die vorgenannten, eine erhöhte Wasserlöslichkeit aufweisenden Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, mit einpolymerisiert.

Monomere, die üblicherweise die innere Festigkeit der Verfilmungen der wäßrigen Polymerisatdispersionen erhöhen, weisen normalerweise wenigstens eine Epoxy-, Hydroxy-, N-Methylol-, Carbonyl- oder wenigstens zwei nicht konjugierte ethylenisch ungesättigte Doppelbindungen auf. Als Beispiele kommen hierfür N-Alkylamide von 3 bis 10 C-Atome aufweisenden, α,β-monoethylenisch ungesättigten Carbonsäuren sowie deren Ester mit 1 bis 4 C-Atome aufweisenden Alkenolen, unter denen das N-Methylolacrylamid und das N-Methylolmethacrylamid besonders bevorzugt sind, zwei Vinylreste aufweisende Monomere, zwei Vinylidenreste aufweisende Monomere sowie zwei Alkenylreste aufweisende Monomere in Betracht.

Besonders vorteilhaft sind dabei die Di-Ester zweiwertiger Alkohole mit α,β-monoethylenisch ungesättigten Monocarbonsäuren, unter denen die Acryl- und Methacrylsäure bevorzugt sind. Beispiele fiir derartige zwei nicht konjugierte ethylenisch ungesättigte Doppelbindungen aufweisende Monomere sind Alkylenglykolidacrylate und -dimethacrylate, wie Ethylenglykoldiacrylat, 1,3-Butylenglykoldiacrylat, 1,4-Butylenglykoldiacrylate sowie Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methaycrylsäure- und Acrylsäure-C₁-C₈-hydroxyalkylester, wie n-Hydroxyethyl-, n-Hydroxypropyl- oder n-Hydroxybutylacrylat und -methacrylat sowie Verbindungen, wie Diacetonacrylamid und Acetylacetoxyethylacrylat beziehungsweise -methacrylat, Ureidoethylmethacrylat und Acrylaidoglykolsäure. Die vorgenannten Monomeren werden im Fall von ausschließlich nach der Methode der radikalischen wäßrigen Emulsionspolymerisaten erzeugten wäßrigen Polymerisatdispersionen, bezogen auf die Gesamtmenge der zu polymerisierenden Monomeren, meist in Mengen von 0,5 bis 10 Gew.-% mit einpolymerisiert.

Üblicherweise werden im Rahmen der radikalischen wäßrigen Emulsionspolymerisation Dispergiermittel mitverwendet, die die Stabilität der erzeugten wäßrigen Polymerisatdispersion gewährleisten.

Als solche kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in den Houben-Weyl, Methoden der organischen Chemie, Band XIV/1, Makromolekulare Stoffe, Georg-Thieme-Verlag, Stuttgart, 1969, Seite 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich.

Gleiches gilt auch für kationische Emulgatoren, während anionische und kationische Emulgatoren meistens miteinander unverträglich sind. Gebräuchliche Emulgatoren sind zum Beispiel ethoxylierte Mono-, Di- und Tri-Alkylphenole (EO-Grad: 3 bis 100, Alkylrest : C₄ bis C₁₂), ethoxylierte Fettalkohole (EO-Grad: 3 bis 100, Alkylrest: C₈ bis C₁₈), sowie Alkali- und Ammoniumsalze von Alkylsulfaten (Alkylrest: C₈ bis C₁₆), von Schwefelsäurehalbestern ethoxylierter Alkylphenole (EO-Grad: 3 bis 100, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.

In der Regel beträgt die Menge an eingesetztem Dispergiermittel 0,5 bis 6, vorzugsweise 1 bis 3 Gew.-%, bezogen auf das Gewicht der radikalisch zu polymerisierenden Monomeren.

Selbstverständlich eignen sich die vorgenannten Dispergiermittel ganz generell zur Stabilisierung der erfindungsgemäßen Verfahrensprodukte. Die erfindungsgemäßen Verfahrensprodukte umfassen aber auch wäßrige Polymerisatdispersionen von selbstemulgierenden Polymerisaten, das heißt, von Polymerisaten, die ionische Gruppen aufweisen, die aufgrund der Abstoßung von Ladungen gleichen Vorzeichens die Stabilisierung zu bewirken vermögen. Bevorzugt weisen die erfindungsgemäßen unmittelbaren Verfahrensprodukte anionische Stabilisierung (insbesondere anionische Dispergiermittel) auf.

### Definition und Bestimmung relevanter Meßgrößen

### Glasübergangstemperatur

Vorzugsweise wird die Glasübergangstemperatur aus der Temperaturabhängigkeit der spezifischen Wärme in einer Differential-Thermoanalyse bestimmt (G. Goldbach in: Kunststoffe, Ordnungszustände und Eigenschaften in: Ullmanns Encyklopädie der technischen Chemie, Band *15,* Seite 219 bis 222, Weinheim, 1980).

Die Glastemperatur von Copolymeren kann zudem aus den Glastemperaturen der jeweiligen Homopolymeren, gewichtet nach den Massenbrüchen der Monomeren und den Ausdehnungskoeffizienten der Polymeren, berechnet werden.

### Mindestfilmbildetemperatur

Die Mindestfilmbildetemperatur des Polymeren ist die tiefste Temperatur, bei der eine Dispersion nach Verdampfen des Wassers gerade noch einen zusammenhängenden Film bildet. Sie liegt nahe bei der Glastemperatur des Polymeren (H. Gerrens in: Polymerisationstechnik in: Ullmann Encyklopädie der technischen Chemie, Band 19, Seite 141, Weinheim, 1989).

Als Meßgerät dient eine Metallplatte, an der ein Temperaturgradient angelegt wird. Beobachtet wird, bei welcher Temperatur der Film beginnt, rissig zu werden (E. Penzel in: Polyacryl- und Polymethacryl-Verbindungen in: Ullmanns Encyklopädie der technischen Chemie, Band 19, Seite 17 bis 18, Weinheim, 1980).

Die Glasübergangstemperatur der im erfindungsgemäßen Verfahren als Dispersion bevorzugt eingesetzten Acrylate liegt zwischen -62 und +6°C (siehe Tabelle 8 aus E. Penzel in: Polyacryl- und Polymethacryl-Verbindungen in: Ullmanns Encyklopädie der technischen Chemie, Band 19, Seite 17 bis 18, Weinheim, 1980). Die daraus resultierenden Mindestfilmbildtemperaturen der Polymere in den Dispersionen liegen demnach oft weit unterhalb der erfindungsgemäß bevorzugten Betriebstemperatur des Verfahrens. Die zu behandelnden Dispersionen sind bei der Verfahrenstemperatur also oft weich und bilden leicht Filme.

### Viskosität

Dispersionen zeigen ein breites Spektrum rheologischen Verhaltens. Das Fließverhalten ist abhängig vom Feststoffgehalt, der Teilchengröße, der Teilchengrößenverteilung und vom Hilfsstoffsystem, das bei der Herstellung eingesetzt wurde. Häufig beobachtete Fließanomalien sind Strukturviskosität und Dilatanz.

Gemessen wird die Viskosität unter standardisierten Meßbedingungen in Kapillarviskosimeter, Couetteviskosimeter oder Kegel-Platte-Viskosimeter (C. Gerth: Rheometrie, Ullmanns Encyklopädie der technischen Chemie, Band 19, Seite 17 bis 18, Weinheim 1980).

Wäßrige Polymerdispersionen sind im allgemeinen sehr gute Filmbildner und neigen bei Polymerisationstemperatur zur Hautbildung. Aus diesem Grunde müssen diese fiir die Lagerung und den Transport auf Temperaturen kleiner als 35°C abgekühlt werden. Deartige Dispersionen enthalten zwischen 30 und 80% Wasser und weisen somit eine hohe Wärmekapazität auf, die meist über 3 kJ/kg K liegt. Diese haben je nach Anwendungsfall eine Viskosität von ca. 20 mPas bis 10 Pas. Um eine solche Dispersion abzukühlen, müssen demgemäß große Wärmemengen abgeführt werden.

Für niedrigviskose Dispersionen, die eine Viskosität kleiner als 100 mPas aufweisen, ist die Abkühlung in der Regel problemlos. Derartige Dispersionen können mittels eines Mantelbades noch im Herstellkessel abgekühlt werden oder beim Transfer des Produkts in einen Einstellkessel oder Lagerbehälter. Hierzu dienen externe Wärmeübertrager, durch die die Dispersionen auf die gewünschte Temperatur gebracht werden. Für höherviskose Dispersionen ist diese indirekte Wärmeabfuhr jedoch aufwendig, da die Wärmedurchgangszahl k_{w} Werte von unter 100 W/m² K annehmen kann. Dies führt zu entsprechend großen Wärmeübertragungsflächen oder sehr langen Abkühlzeiten.

Da die Verdampfungsenthalpie von Wasser mit 2260 KJ/kg sehr hoch ist, kann sie dazu genutzt werden, Dispersionen abzukühlen. Dazu wird die Dispersion in ein Vakuum eingebracht, das unterhalb des Partialdruckes des Wassers liegt. Wasser verdampft und die Dispersion kühlt dabei ab. Diese wird dabei um einige Prozente aufkonzentriert, was im allgemeinen ein erwünschter Nebeneffekt ist. Diese Aufkonzentrierung wird in bekannter Weise auch als Haupteffekt genutzt, indem die Dispersion in Zyklen aufgeheizt und ins Vakuum entspannt wird, bis der gewünschte Feststoffgehalt erreicht ist (US-3,073,380).

Zur physikalischen Desodorierung durch Strippen mit Wasserdampf wird häufig eine als Batch-Stripper bezeichnete Apparatur benutzt. Eine Ausführungsform und das entsprechende Verfahren ist in der DE-A-1 248 943 beschrieben. Bei dem Verfahren fällt die Dispersion oder Flüssigkeit nach dem Desodorierschritt in Abhängigkeit von den Produkteigenschaften mit einer Temperatur von rund 60 bis 90°C an. Diese Dispersion oder Flüssigkeit kann dann durch das sogenannte "Nachlaufenlassen" (Stehenlassen oder Rühren im Vakuum ohne Dampfeinleitung) abgekühlt werden. In der Praxis verschmutzt jedoch beim Einsatz von Dispersionen, die Polymer enthalten, die Apparatur während dieses Vorganges sehr stark. Die Dispersion verfilmt, bildet Häute, die zu einem Wandbelag anwachsen, der schließlich abfällt und die Apparatur verstopfen kann. Dies führt zu häufigen und aufwendigen Reinigungsarbeiten und damit zu Produktionsausfällen.

Auch beim Abkühlen mittels eines Mantelbades treten diese Probleme auf. Außerdem sind insbesondere bei viskosen Dispersionen oder Flüssigkeiten bei der Abkühlung mittels eines Mantelbades die Abkühlzeiten sehr lange.

Die Wirtschaftlichkeit des vorstehend beschriebenen Verfahrens wird durch die Dauer des Abkühlvorgangs und beim Einsatz bestimmter Dispersionen auch durch die auftretende Verschmutzung der Apparatur beeinflußt.

Der Erfindung lag die Aufgabe zugrunde, das vorstehend beschriebene Verfahren zur Desodorierung so zu verbessern, daß
1. die Zeit der Abkühlung der Dispersion bzw. der Flüssigkeit im Anschluß an die Desodorierung verkürzt wird,
2. bei polymerhaltigen Dispersionen während der Abkühlung keine Hautoder Filmbildung erfolgt, bei der die Apparatur verschmutzt und/oder verstopft wird;
3. der appartive Aufwand dabei möglichst gering gehalten wird.

Die Lösung geht aus von einem Verfahren zur Abkühlung von Dispersionen oder Flüssigkeiten im Anschluß an eine Desodorierung durch
a) Hindurchleiten von Wasserdampf durch die sich in einem Kessel befindende zu kühlende Dispersion oder Flüssigkeit, welche dadurch aufschäumt,
b) Abführung des Schaums aus dem oberen Teil des Kessels über eine Düse in einen evakuierten Abscheidebehälter, wobei der Schaum gebrochen wird,
c) Kondensierung des aus dem Schaum gebildeten Wasserdampfs in einem Wärmetauscher und gleichzeitige Entfernung flüchtiger organischer Komponenten und
d) Rückführung des gebrochenen Schaums in den Kessel,

Durchführung der Schritte a) bis d) solange, bis die Dispersion oder Flüssigkeit im gewünschten Maß desodoriert ist.

Das erfindungsgemäße Verfahren ist dadurch gekennzeichnet, daß nach Beendigung der Desodorierung (gemäß der Schritte a) bis d)) die heiße Dispersion oder Flüssigkeit aus dem unteren Bereich des Kessels durch die Düse in den evakuierten Abscheidebehälter abgeführt wird, so daß die Dispersion oder die Flüssigkeit abgekühlt wird, wobei die Düse und der evakuierte Abscheidebehälter zuvor auch zur Durchführung der Stufe b) verwendet wurden, daß der im Abscheidebehälter befindliche Wasserdampf an dem Wärmetauscher kondensiert wird, der auch zuvor in Stufe c) eingesetzt wurde und daß die gekühlte Dispersion oder Flüssigkeit vom Boden des Abscheidebehälters abgeführt wird.

Es wurde überraschenderweise gefunden, daß die verwendete Zuleitungsdüse in den evakuieten Abscheidebehälter für zwei verschiedene Anwendungen geeignet ist:
- 1. Anwendung:: Brechnung des Schaums (durch die abrupte Druckdifferenz) bei der Desodorierung und
- 2. Anwendung:: Abkühlung der desodorierten Dispersion oder Flüssigkeit beim Transfer in den evakuierten Abscheidebehälter.

Aus diesem Grund kann neben der Düse ein Großteil der Apparatur, und zwar der evakuierte Abscheidebehälter, der Wärmetauscher und die Pumpe sowohl für das Desodorierverfahren, als auch für das Abkühlverfahren verwendet werden. Dies reduziert den apparativen Aufwand und verbessert die Wirtschaftlichkeit des Verfahrens.

Gemäß einer vorteilhaften Ausbildung der Erfindung wird die heiße Dispersion aus dem Kessel mittels einer Pumpe abgepumpt und in ein Steigrohr zum Abscheidebehälter geführt. Der Abscheidebehälter wird dabei vorteilhafterweise auf 30 bis 100 mbar abs. vorzugsweise 50 mbar abs. evakuiert. Der sich am Boden des Abscheiders ansammelnde Schaum wird mittels einer Pumpe in einen Produktbehälter gefördert. Der aus der Dispersion gebildete Wasserdampf wird in einem Wärmeübertrager kondensiert. Das Vakuum im Abscheidebehälter wird bevorzugt mit einer zweistufigen Wasserringpumpe erzeugt.
Polymer-Dispersionen werden im allgemeinen auf Temperaturen unter 35°C abgekühlt, um einer späteren Filmbildung in dem Behälter 7 entgegenzuwirken. Beim dem Verfahren kommen bevorzugt hochviskose Dispersionen oder Flüssigkeiten zum Einsatz.

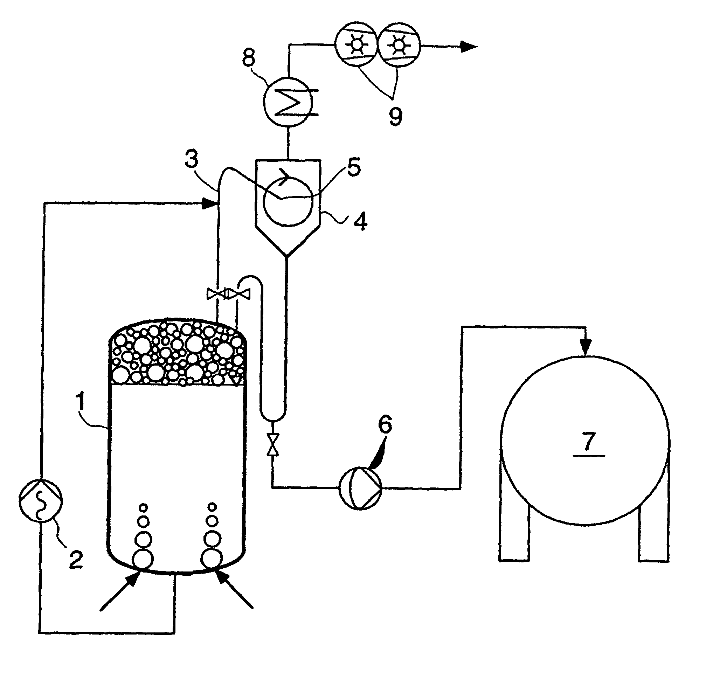

Weitere Einzelheiten und Vorteile der Erfindung können dem in der Zeichnung dargestellten Ausführungsbeispiel entnommen werden. Dort wird die heiße Dispersion oder Flüssigkeit nach Desodorierung aus dem Kessel 1 mittels einer Pumpe 2 abgepumpt und über das Steigrohr 3 durch die Düse 5 zu dem auf 50 mbar (entsprechend 33°C) evakuierten Abscheidebehälter 4 geführt. Die gekühlte Dispersion oder Flüssigkeit sammelt sich am Boden des Abscheiders 4, von wo diese mittels der Pumpe 6 in einen Behälter 7 für das Fertigprodukt gefördert wird. Die gekühlte Dispersion oder Flüssigkeit sammelt sich am Boden des Abscheiders 4 von wo diese mittels der Pumpe 6 in einen Behälter 7 für das Fertigprodukt gefördert wird. Der aus der Dispersion oder Flüssigkeit gebildete Wasserdampf wird in einem Wärmetauscher 8 kondensiert und zurückgeführt. Das erforderliche Vakuum wird mit einer zweistufigen Wasserrringpumpe 9 erzeugt.

## Patentansprüche

1. Verfahren zur Abkühlung von Dispersionen oder Flüssigkeiten im Anschluß an eine Desodorierung durch
a) Hindurchleiten von Wasserdampf durch die sich in einem Kessel (1) befindende zu kühlende Dispersion oder Flüssigkeit, welche dadurch aufschäumt,
b) Abführung des Schaums aus dem oberen Teil des Kessels über eine Düse (5) in einen evakuierten Abscheidebehälter (4), wobei der Schaum gebrochen wird,
c) Kondensierung des aus dem Schaum gebildeten Wasserdampfs in einem Wärmetauscher (8) und gleichzeitige Entfernung flüchtiger organischer Komponenten und
d) Rückführung des gebrochenen Schaums in den Kessel (1),
Durchführung der Schritte a) bis d) solange, bis die Dispersion oder Flüssigkeit im gewünschten Maß desodoriert ist,
**dadurch gekennzeichnet, daß** nach Beendigung der Desodorierung (gemäß der Schritte a) bis d)) die heiße Dispersion oder Flüssigkeit aus dem unteren Bereich des Kessels (1) durch die Düse (5) in den evakuierten Abscheidebehälter (4) abgeführt wird, so daß die Dispersion oder die Flüssigkeit abgekühlt wird, wobei die Düse (5) und der evakuierte Abscheidebehälter (4) zuvor auch zur Durchführung der Stufe b) verwendet wurden, daß der im Abscheidebehälter (4) befindliche Wasserdampf an dem Wärmetauscher (8) kondensiert wird, der auch zuvor in Stufe c) eingesetzt wurde und daß die gekühlte Dispersion oder Flüssigkeit vom Boden des Abscheidebehälters (4) abgeführt wird.

2. Verfahren nach Anspruch 1, **dadurch gekennzeichnet, daß** die heiße Dispersion oder Flüssigkeit aus dem Kessel (1) mittels einer Pumpe (2) abgepumpt und in einem Steigrohr zum Abscheidebehälter (4) geführt wird.

3. Verfahren nach Anspruch 2, **dadurch gekennzeichnet, daß** der Abscheidebehälter (4) auf 30 bis 100 mbar abs, vorzugsweise 50 mbar abs, evakuiert wird.

4. Verfahren nach einem der Ansprüche 1 bis 3, **dadurch gekennzeichnet, daß** das Vakuum mit einer zweistufigen Wasserringpumpe (9) erzeugt wird.

5. Verfahren nach einem der Ansprüche 1 bis 4, **dadurch gekennzeichnet, daß** der Wasserdampf vom unteren Bereich des Kessels (1) in die Dispersion oder Flüssigkeit eingeleitet wird.

6. Verfahren nach einem der Ansprüche 1 bis 5, **dadurch gekennzeichnet, daß** die abgekühlte Dispersion mit einer Pumpe (6) in einen Behälter (7) für das Fertigprodukt gefördert wird.

7. Verfahren nach einem der Ansprüche 1 bis 6, **dadurch gekennzeichnet, daß** hochviskose Dispersionen oder Flüssigkeiten eingesetzt werden.

## Claims

1. A process for cooling dispersions or liquids after a deodorization by means of
a) steam being passed through the dispersion or liquid to be cooled and held in a vessel (1), said dispersion or liquid being caused to foam up as a result,
b) the foam being discharged from the top section of the vessel via a nozzle (5) into an evacuated separation vessel (4), the foam being broken in the process,
c) the water vapor formed from the foam being condensed in a heat exchanger (8) and volatile organic components being removed at the same time, and
d) the broken foam being returned to the vessel (1),
the steps a) to d) being performed until the dispersion or liquid has been deodorized to the desired extent,
wherein, after completion of the deodorization (in accordance with steps a) to d)), the hot dispersion or liquid is discharged from the bottom section of the vessel (1) through the nozzle (5) into the evacuated separation vessel (4), so that the dispersion or the liquid is cooled, the nozzle (5) and the evacuated separation vessel (4) also being used beforehand for performing step b), wherein the water vapor held in the separation vessel (4) is condensed at the heat exchanger (8) which was also employed beforehand in step c), and wherein the cooled dispersion or liquid is discharged from the bottom of the separation vessel (4).

2. A process as claimed in claim 1, wherein the hot dispersion or liquid is pumped from the vessel (1) by means of a pump (2) and is passed to the separation vessel (4) in a riser.

3. A process as claimed in claim 2, wherein the separation vessel (4) is evacuated to from 30 to 100 mbar absolute, preferably to 50 mbar absolute.

4. A process as claimed in any one of claims 1 to 3, wherein the vacuum is generated by means of the two-stage water-ring pump (9).

5. A process as claimed in any one of claims 1 to 4, wherein the steam from the bottom section of the vessel (1) is introduced into the dispersion or liquid.

6. A process as claimed in any one of claims 1 to 5, wherein the cooled dispersion is delivered, by means of a pump (6), into a vessel (7) for the finished product.

7. A process as claimed in any one of claims 1 to 6, wherein high-viscosity dispersions or liquids are used.

## Revendications

1. Procédé pour le refroidissement de dispersions et de liquides suite à une désodorisation, au moyen
a) d'un transport de vapeur d'eau au travers de la dispersion ou du liquide destinés au refroidissement, qui est disposé dans une cuve (1) et qui, de par ce traitement, mousse,
b) d'une évacuation de la mousse à partir de la partie supérieure de la cuve, par l'intermédiaire d'une buse (5), dans un récipient séparateur (4) sous vide, en cassant la mousse,
c) d'une condensation, dans un échangeur de chaleur (8), de la vapeur d'eau formée à partir de la mousse, et d'une élimination simultanée des composants organiques volatils, et
d) d'un recyclage de la mousse cassée dans la cuve (1),
en réalisant les étapes a) à d) pendant la durée nécessaire pour obtenir le degré choisi de désodorisation de la dispersion ou du liquide,
**caractérisé en ce que** l'on procède, après avoir terminé la désodorisation (selon les étapes a) à d)), à une évacuation de la dispersion ou du liquide chaud, à partir de la partie inférieure de la cuve (1), par l'intermédiaire de la buse (5), dans le récipient séparateur (4) sous vide, de sorte que la dispersion ou le liquide soit refroidi, procédé lors duquel on met également en oeuvre, dans un premier temps, la buse (5) et le récipient séparateur (4) sous vide, afin de pouvoir réaliser l'étape b), **caractérisé en ce que** l'on procède à une condensation de la vapeur d'eau situé dans le récipient séparateur (4), au moyen de l'échangeur de chaleur (8) que l'on a employé auparavant dans l'étape c), et **caractérisé en ce que** l'on évacue la dispersion ou le liquide refroidi, à partir du fond du récipient séparateur (4).

2. Procédé selon la revendication 1, **caractérisé en ce que** l'on pompe, au moyen d'une pompe (2), la dispersion ou le liquide chaud, à partir de la cuve (1), en la ou le conduisant, par l'intermédiaire d'une conduite montante, au récipient séparateur (4).

3. Procédé selon la revendication 2, **caractérisé en ce que** l'on produit le vide dans le récipient séparateur (4) jusqu'à une pression comprise entre 30 et 100 mbars absolus, de préférence de 50 mbars absolus.

4. Procédé selon l'une quelconque des revendications 1 à 3, **caractérisé en ce que** l'on produit le vide au moyen d'une pompe à anneau d'eau (9) à deux étages.

5. Procédé selon l'une quelconque des revendications 1 à 4, **caractérisé en ce que** l'on introduit, dans la dispersion ou dans le liquide, la vapeur d'eau à partir de la partie inférieure de la cuve (1).

6. Procédé selon l'une quelconque des revendications 1 à 5, **caractérisé en ce que** l'on débite la dispersion refroidie, au moyen d'une pompe (6), dans un récipient (7) destiné au produit fini.

7. Procédé selon l'une quelconque des revendications 1 à 6, **caractérisé en ce que** l'on met en oeuvre des liquides et des dispersions à viscosité élevée.
